# EUROPEAN PATENT SPECIFICATION

(11) **EP 3 838 624 B1**
(45) Date of publication and mention of the grant of the patent: **01.02.2023**
(21) Application number: 20211146.4
(22) Date of filing: 02.12.2020
(51) Int. Cl.: B60C 11/00, B60C 11/03, B60C 11/12

(54) **PNEUMATIC TIRE**
LUFTREIFEN
PNEUMATIQUE

(30) Priority: 19.12.2019 JP 2019228966
(43) Date of publication of application: 23.06.2021
(73) Proprietor: Sumitomo Rubber Industries, Ltd., Kobe-shi, Hyogo-ken 651-0072 (JP)
(72) Inventor: TANABE, Maiko, Kobe-shi, Hyogo 651-0072 (JP)
(74) Representative: Manitz Finsterwald Patent- und Rechtsanwaltspartnerschaft mbB

(56) References cited:
- EP-A2- 2 781 374
- WO-A1-2012/161314
- DE-A1-102010 042 836
- FR-A1- 3 026 055

## Description

### BACKGROUND OF THE INVENTION

### Field of the Invention

The present invention relates to a pneumatic tire.

### Description of the Background Art

A tire comes into contact with a road surface at the tread thereof. In consideration of running on a wet road surface, grooves are normally formed on the tread. Various studies have been conducted for the tread in order to improve the performance of the tire (for example, Japanese Laid-Open Patent Publication No. H3-25003).

A tire in accordance with the preamble of claim 1 is known from FR 3 026 055 A1. Related tires are known from DE 10 2010 042836 A1, WO 2012/161314 A1 and EP 2 781 374 A2.

Vehicles have been becoming quieter, and thus tires have also been required to improve quietness. In recent years, electric vehicles in each of which a motor is used as a power generator instead of an engine have become widespread, so that tires have been required to further improve quietness.

If a thick tread is adopted, quietness can be improved. However, in this case, there is a concern that the stiffness of the tread part is decreased, resulting in a decrease in steering stability.

The present invention has been made in view of the above circumstances and provides a pneumatic tire in which improvement of quietness is achieved while a decrease in steering stability is suppressed.

### SUMMARY OF THE INVENTION

A pneumatic tire according to an aspect of the present invention is directed to a pneumatic tire including a tread having a base layer and a cap layer located radially outward of the base layer. The cap layer includes a center element and a pair of side elements located outward of the center element in an axial direction, and each side element is more flexible than the center element. A hardness of the base layer is equal to a hardness of each side element, when the hardness is measured according to the standards of JIS K6253 under a temperature condition of 23°C using a type A durometer, or the base layer is more flexible than each side element. A plurality of circumferential grooves are formed on the tread, whereby a plurality of land portions are formed in the tread. Among the plurality of circumferential grooves, a circumferential groove located on each outer side in the axial direction is a shoulder circumferential groove. Among the plurality of land portions, a land portion located on each outer side in the axial direction is a shoulder land portion, and a land portion located inward of the shoulder land portion is a middle land portion. The cap layer in the shoulder land portion includes the side element. A plurality of lateral grooves are formed on the shoulder land portion. The plurality of lateral grooves each have an end portion within the shoulder land portion and extend from the end portion toward an end of the tread.

Preferably, in the pneumatic tire, a ratio of the hardness of each side element to a hardness of the center element is not less than 85% and not greater than 98%.

Preferably, in the pneumatic tire, a ratio of a width of each lateral groove to a width of the shoulder circumferential groove is not less than 45% and not greater than 65%, and a ratio of a depth of each lateral groove to a depth of the shoulder circumferential groove is not less than 60% and not greater than 80%.

Preferably, in the pneumatic tire, an open sipe connecting each lateral groove and the shoulder circumferential groove is formed on a shoulder land portion located on an inner side of a vehicle when the pneumatic tire is mounted on the vehicle.

Preferably, in the pneumatic tire, a ratio of a length in the axial direction of the open sipe to a width of the shoulder land portion is not less than 25% and not greater than 40%.

Preferably, in the pneumatic tire, a ratio of the width of the shoulder land portion to a ground-contact width of the tread is not less than 20% and not greater than 35%.

Preferably, in the pneumatic tire, a ratio of the average thickness of the base layer and the average thickness of the tread in the shoulder land portion is higher than a ratio of the average thickness of the base layer and the average thickness of the tread in the middle land portion.

Preferably, in the pneumatic tire, a difference between the ratio of the average thickness of the base layer and the average thickness of the tread in the shoulder land portion and the ratio of the average thickness of the base layer and the average thickness of the tread in the middle land portion is not less than 5% and not greater than 10%.

Preferably, in the pneumatic tire, the cap layer in the shoulder land portion is composed of the side element.

Preferably, in the pneumatic tire, the plurality of circumferential grooves include a middle circumferential groove located inward of the shoulder circumferential groove in the axial direction, a portion between the shoulder circumferential groove and the middle circumferential groove is the middle land portion, and a plurality of dead-end sipes are formed on the middle land portion. The dead-end sipes include first dead-end sipes each having an end portion within the middle land portion and connecting the end portion and the shoulder circumferential groove, and second dead-end sipes each having an end portion within the middle land portion and connecting the end portion and the middle circumferential groove. In a middle land portion located on an outer side of the vehicle when the pneumatic tire is mounted on the vehicle, the number of the second dead-end sipes formed on the middle land portion is larger than the number of the first dead-end sipes formed thereon.

In the pneumatic tire according to the present invention, improvement of quietness is achieved while a decrease in steering stability is suppressed.

### BRIEF DESCRIPTION OF THE DRAWINGS

FIG. 1 is a cross-sectional view showing a part of a pneumatic tire according to an embodiment of the present invention;
FIG. 2 is a development showing a part of a tread surface of the tire in FIG. 1;
FIG. 3 is a cross-sectional view taken along a line a-a in FIG. 2; and
FIG. 4 is a cross-sectional view showing a part of the tire in FIG. 1.

### DESCRIPTION OF THE PREFERRED EMBODIMENTS

Hereinafter, the present invention will be described in detail based on preferred embodiments with appropriate reference to the drawings.

In the present invention, a state where a tire is mounted on a normal rim, the internal pressure of the tire is adjusted to a normal internal pressure, and no load is applied to the tire is referred to as a normal state. In the present invention, unless otherwise specified, the dimensions and angles of components of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. In the case where the tire is for a passenger car, unless otherwise specified, the normal internal pressure is 250 kPa.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads. In the case where the tire is for a passenger car, unless otherwise specified, the normal load is a load equal to 88% of the above load.

In the present invention, of the elements forming the tire, the hardness of each element formed from a crosslinked rubber is measured according to the standards of JIS K6253 under a temperature condition of 23°C using a type A durometer.

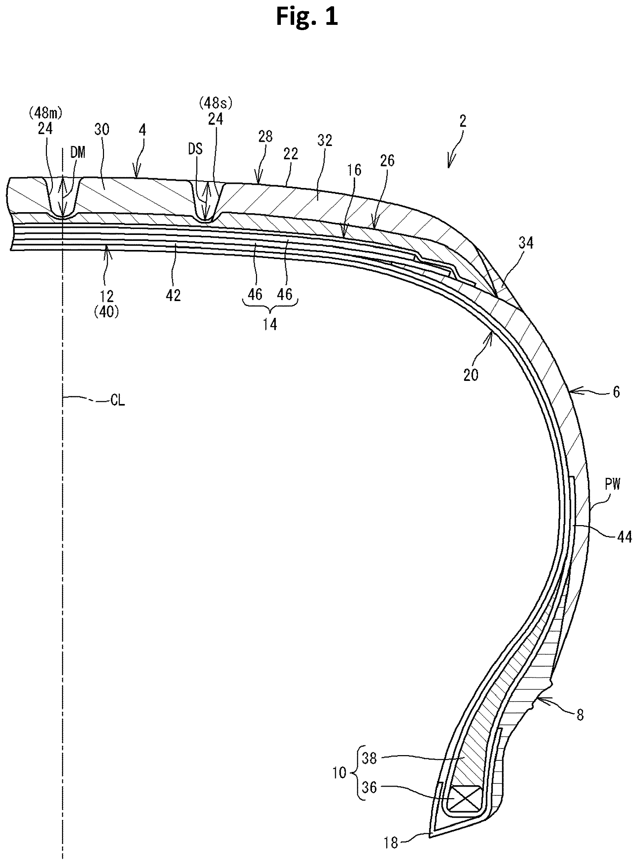

FIG. 1 shows a part of a pneumatic tire 2 (hereinafter, sometimes referred to simply as "tire 2") according to an embodiment of the present invention. The tire 2 is mounted to a passenger car.

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

In FIG. 1, reference character PW represents an axially outer end of the tire 2. In the case where decorations such as patterns and letters are present on a side surface, the outer end PW is specified on the basis of a virtual side surface obtained on the assumption that the decorations are not present. The distance in the axial direction from one outer end PW to the other outer end PW is the maximum width of the tire 2, that is, the cross-sectional width (see JATMA or the like) of the tire 2. The outer end PW is a position (hereinafter, maximum width position) at which the tire 2 has the maximum width.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 is formed from a crosslinked rubber. The tread 4 comes into contact with a road surface at an outer surface 22 thereof, that is, at a tread surface 22. In the tire 2, grooves 24 are formed on the tread surface 22.

The tread 4 has a base layer 26 and a cap layer 28. The base layer 26 is located radially outward of the belt 14 and the band 16. The base layer 26 covers the entirety of the band 16. A hardness Hb of the base layer 26 is not less than 50 and not greater than 60.

The cap layer 28 is located radially outward of the base layer 26. The cap layer 28 covers the entirety of the base layer 26. The outer surface of the cap layer 28 is the above-described tread surface 22.

In the tire 2, the cap layer 28 has a center element 30 and a pair of side elements 32. The center element 30 forms a center portion of the cap layer 28 in the axial direction. Each side element 32 is located outward of the center element 30 in the axial direction. The side element 32 forms an outer portion of the cap layer 28 in the axial direction. In the tire 2, the cap layer 28 is composed of the center element 30 and the pair of side elements 32.

In the tire 2, the hardness of each side element 32 is lower than the hardness of the center element 30. In other words, the side element 32 is more flexible than the center element 30. The above-described base layer 26 is more flexible than the center element 30. In the tire 2, the hardness of the base layer 26 is equal to the hardness of the side element 32, or the base layer 26 is more flexible than the side element 32.

Each sidewall 6 is connected to an end of the tread 4. The sidewall 6 is located radially inward of the tread 4. The sidewall 6 extends from the end of the tread 4 toward the clinch 8. The sidewall 6 is formed from a crosslinked rubber.

In the tire 2, the tread 4 and the sidewall 6 are connected to each other via a wing 34. The wing 34 is formed from a crosslinked rubber for which adhesion is taken into consideration.

Each clinch 8 is located radially inward of the sidewall 6. Although not shown, the clinch 8 comes into a flange of a rim. The clinch 8 is formed from a crosslinked rubber for which wear resistance is taken into consideration.

Each bead 10 is located axially inward of the clinch 8. The bead 10 includes a core 36 and an apex 38. The core 36 has a ring shape. The core 36 includes a wire made of steel. As shown in FIG. 1, the core 36 has a rectangular cross-sectional shape. The apex 38 is located radially outward of the core 36. The apex 38 is formed from a crosslinked rubber that has high stiffness. As shown in FIG. 1, the apex 38 is tapered outward in the radial direction.

The carcass 12 is located inward of the tread 4, the pair of sidewalls 6, and the pair of clinches 8. The carcass 12 extends on and between one bead 10 and the other bead 10. The carcass 12 has a radial structure. The carcass 12 includes at least one carcass ply 40.

The carcass 12 of the tire 2 is composed of one carcass ply 40. The carcass ply 40 is turned up around each core 36. The carcass ply 40 has: a ply main body 42 that extends on and between one core 36 and the other core 36; and a pair of turned-up portions 44 that are connected to the ply main body 42 and turned up around the respective cores 36 from the inner side toward the outer side in the axial direction. In the tire 2, an end of each turned-up portion 44 is located outward of the maximum width position PW in the radial direction.

The carcass ply 40 includes a large number of carcass cords aligned with each other, which are not shown. These carcass cords are covered with a topping rubber. Each carcass cord intersects the equator plane CL. In the tire 2, a cord formed from an organic fiber is used as each carcass cord. Examples of the organic fiber include nylon fibers, rayon fibers, polyester fibers, and aramid fibers.

The belt 14 is laminated on the carcass 12 on the radially inner side of the tread 4. The belt 14 includes at least two belt plies 46 laminated in the radial direction.

The belt 14 of the tire 2 is composed of two belt plies 46. Each of the two belt plies 46 includes a large number of belt cords aligned with each other, which are not shown. These belt cords are covered with a topping rubber. Each belt cord is inclined relative to the equator plane CL. The material of each belt cord is steel.

The band 16 is located inward of the tread 4 in the radial direction. The band 16 is located between the tread 4 and the belt 14 in the radial direction. The band 16 of the tire 2 is a full band that covers the entirety of the belt 14. The band 16 may further include a pair of edge bands that cover end portions of the full band. The band 16 may be composed of a pair of edge bands instead of a full band. In this case, the edge bands cover end portions of the belt 14.

The band 16 includes a band cord, which is not shown. In the band 16, the band cord is spirally wound in the circumferential direction. The band cord is covered with a topping rubber. A cord formed from an organic fiber is used as the band cord. Examples of the organic fiber include nylon fibers, rayon fibers, polyester fibers, and aramid fibers.

Each chafer 18 is located radially inward of the bead 10. Although not shown, the chafer 18 comes into contact with a seat of the rim. In the tire 2, the chafer 18 includes a fabric and a rubber with which the fabric is impregnated.

The inner liner 20 is located inward of the carcass 12. The inner liner 20 forms an inner surface of the tire 2. The inner liner 20 is formed from a crosslinked rubber that has an excellent air blocking property. The inner liner 20 maintains the internal pressure of the tire 2.

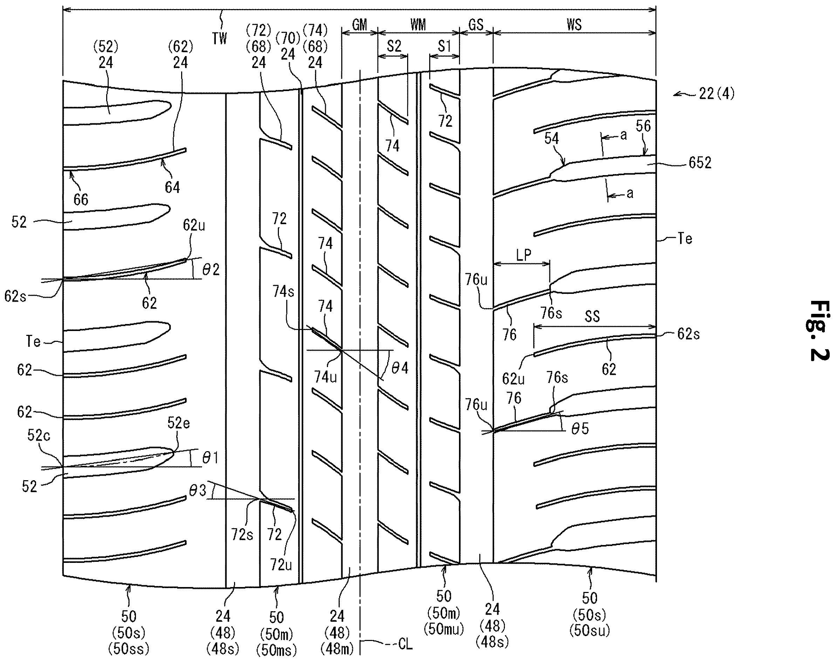

FIG. 2 shows a development of the tread surface 22. FIG. 2 shows a part of the tread surface 22. In FIG. 2, the right-left direction is the axial direction of the tire 2, and the up-down direction is the circumferential direction of the tire 2. The direction perpendicular to the surface of the sheet of FIG. 2 is the radial direction of the tire 2.

In FIG. 2, reference character Te represents an axially outer end of a ground-contact surface obtained by pressing the tire 2 in the normal state against a flat road surface at a camber angle of 0° in the normal load (hereinafter, an end of the ground-contact surface). A double-headed arrow TW represents a ground-contact width of the tread 4. The ground-contact width TW is represented as the distance in the axial direction from one end Te of the ground-contact surface to the other end Te of the ground-contact surface.

As described above, the grooves 24 are formed on the tread 4 of the tire 2. Accordingly, a tread pattern is formed. Of the grooves 24 forming the tread pattern, the grooves 24 each having a groove width of 1.5 mm or less are referred to as sipes.

On the tread 4 of the tire 2, a plurality of circumferential grooves 48 each having a groove width of at least 2.0 mm or greater and extending in the circumferential direction are formed as the grooves 24 forming the tread pattern. Accordingly, a plurality of land portions 50 are formed in the tread 4. On the tread 4, at least three circumferential grooves 48 are formed. As shown in FIG. 2, three circumferential grooves 48 are formed on the tread 4 of the tire 2, and four land portions 50 are formed therein.

In the tire 2, among the plurality of circumferential grooves 48, a circumferential groove 48s located on the outer side in the axial direction is a shoulder circumferential groove. A circumferential groove 48m located inward of the shoulder circumferential groove 48s in the axial direction is a middle circumferential groove. In the tire 2, the middle circumferential groove 48m is located on the equator plane CL. Three circumferential grooves 48 are formed on the tread 4 of the tire 2 and include a middle circumferential groove 48m located on the equator plane CL, and a pair of shoulder circumferential grooves 48s each located outward of the middle circumferential groove 48m. In the tire 2, two or more circumferential grooves 48 may be provided between the right and left shoulder circumferential grooves 48s.

In FIG. 2, a double-headed arrow GM represents the groove width of the middle circumferential groove 48m. A double-headed arrow GS represents the groove width of the shoulder circumferential groove 48s. Each of the groove widths of the grooves 24 such as the circumferential grooves 48 is represented as the shortest distance from one edge of the groove 24 to the other edge of the groove 24. In the case where each edge is rounded, the groove width is measured with the point of intersection of an extension of a groove wall and an extension of the tread surface 22 being regarded as an edge.

The groove width and the groove depth of each circumferential groove 48 are set as appropriate in consideration of the specifications of the tire 2, etc. From the viewpoint of balancing drainage performance and steering stability well, the groove width GM of the middle circumferential groove 48m and the groove width GS of each shoulder circumferential groove 48s are each preferably not less than 5% and not greater than 6% of the tread ground-contact width TW. From the same viewpoint, the groove depth DM (see FIG. 1) of the middle circumferential groove 48m and the groove depth DS (see FIG. 1) of each shoulder circumferential groove 48s are each preferably not less than 6 mm and not greater than 10 mm.

In the tire 2, among the plurality of land portions 50, a land portion 50s located on the outer side in the axial direction is a shoulder land portion. A land portion 50m located inward of the shoulder land portion 50s in the axial direction is a middle land portion. In the tire 2, a portion between the middle circumferential groove 48m and each shoulder circumferential groove 48s is a middle land portion 50m, and a portion that is outward of each shoulder circumferential groove 48s is a shoulder land portion 50s.

In FIG. 2, a double-headed arrow WM represents the width of the middle land portion 50m. The width WM of the middle land portion 50m is represented as the distance in the axial direction from one edge thereof to the other edge thereof. A double-headed arrow WS represents the width of the shoulder land portion 50s. The width WS of the shoulder land portion 50s is represented as the distance in the axial direction from an edge of the shoulder land portion 50s to the end Te of the ground-contact surface. The width WM and the width WS are measured along the tread surface 22.

In the tire 2, the width of each land portion 50 is set as appropriate in consideration of the specifications of the tire 2, etc. From the viewpoint of balancing drainage performance and steering stability well, the ratio (WM/TW) of the width WM of the middle land portion 50m to the ground-contact width TW of the tread 4 is preferably not less than 10% and preferably not greater than 20%. From the same viewpoint, the width WS of the shoulder land portion 50s is preferably not less than 1.1 times and preferably not greater than 3.2 times the width WM of the middle land portion 50m.

On each shoulder land portion 50s, a plurality of lateral grooves 52 are formed as the grooves 24 forming the tread pattern. These lateral grooves 52 extend substantially in the axial direction and are located at intervals in the circumferential direction. Each of the lateral grooves 52 has a groove width of at least 2.0 mm or greater.

Each lateral groove 52 has an end portion within the shoulder land portion 50s. The lateral groove 52 extends from the end portion toward the end of the tread 4. The lateral groove 52 includes a curved portion 54 that includes the end portion and is inclined relative to the axial direction, and a straight portion 56 that is connected to the curved portion 54 and extends in the axial direction. In the tire 2, the curved portion 54 is shaped such that the angle of the curved portion 54 relative to the axial direction gradually increases toward the equator side. The edges of the lateral groove 52 contribute to ensuring the traction performance of the tire 2.

The lateral groove 52 is inclined relative to the axial direction as a whole. In FIG. 2, reference character θ1 represents the inclination angle of the lateral groove 52. The inclination angle θ1 is represented as an angle, relative to the axial direction, of a straight line that passes through: a point of intersection 52c of a straight line representing the end Te of the ground-contact surface and a groove width center line of the lateral groove 52; and an axially inner end 52e of the groove width center line of the lateral groove 52.

In the tire 2, from the viewpoint of balancing noise performance and steering stability well while ensuring traction performance, the inclination angle θ1 of the lateral groove 52 is preferably not less than 5° and preferably not greater than 15°.

As described above, in the tire 2, each lateral groove 52 formed on the shoulder land portion 50s has an end portion within the shoulder land portion 50s and extends from this end portion toward the end of the tread 4. As compared to a lateral groove formed so as to traverse a shoulder land portion, that is, so as to connect the shoulder circumferential groove to an end of a tread, the flow of air passing through the lateral groove 52 is limited. The sound pressure level when air passes through the lateral groove 52 is reduced, so that improvement of quietness is achieved in the tire 2.

In order to achieve improvement of quietness, for example, adopting a thick tread is considered. However, in the tire 2, it is unnecessary to adopt a thick tread. In the tire 2, improvement of quietness can be achieved without causing a decrease in steering stability and an increase in mass and rolling resistance which may be caused by adopting a thick tread.

Since each lateral groove 52 has an end portion within the shoulder land portion 50s, the lateral groove 52 acts so as to increase the stiffness of the shoulder land portion 50s as compared to a lateral groove that traverses a shoulder land portion. When the stiffness of the shoulder land portion 50s is increased, the stiffness balance of the tread 4 may be lost, resulting in an excessive increase in cornering force. In this case, steering stability and rollover resistance may be decreased.

However, in the tire 2, the cap layer 28 in each shoulder land portion 50s includes the side element 32. As described above, the side element 32 is more flexible than the center element 30. The hardness of the base layer 26 is equal to the hardness of the side element 32, or the base layer 26 is more flexible than the side element 32. In the tire 2, even though each lateral groove 52 is formed so as to have an end portion within the shoulder land portion 50s, an increase in the stiffness of the shoulder land portion 50s is appropriately suppressed, so that the stiffness of the entirety of the tread 4 is well balanced. In the tire 2, a decrease in steering stability and rollover resistance is suppressed. In other words, in the tire 2, required steering stability and rollover resistance are ensured.

As described above, in the tire 2, improvement of quietness is achieved. In the tire 2, improvement of quietness is achieved while a decrease in steering stability is suppressed. The tire 2 can achieve improvement of quietness while suppressing a decrease in steering stability and rollover resistance and an increase in mass and rolling resistance.

As described above, each side element 32 is more flexible than the center element 30. Specifically, in the tire 2, the ratio (Hs/Hc) of a hardness Hs of the side element 32 to a hardness Hc of the center element 30 is preferably not less than 85% and preferably not greater than 98%.

When the ratio (Hs/Hc) is set so as to be not greater than 98%, the flexible side element 32 effectively contributes to ensuring steering stability and rollover resistance. From this viewpoint, the ratio (Hs/Hc) is more preferably not greater than 95%.

When the ratio (Hs/Hc) is set so as to be not less than 85%, the stiffness of the shoulder land portion 50s is appropriately maintained. In this case as well, the side element 32 effectively contributes to ensuring steering stability and rollover resistance. From this viewpoint, the ratio (Hs/Hc) is more preferably not less than 90%.

In the tire 2, the hardness Hs of the side element 32 is preferably not less than 54 and preferably not greater than 63. Accordingly, the side element 32 effectively contributes to ensuring steering stability and rollover resistance. From this viewpoint, the hardness Hs of the side element 32 is more preferably not less than 56 and more preferably not greater than 61.

In the tire 2, from the viewpoint of balancing steering stability and ride comfort well, the hardness Hc of the center element 30 is preferably not less than 60 and preferably not greater than 70.

As described above, in the tire 2, the hardness of the base layer 26 is equal to the hardness of the side element 32, or the base layer 26 is more flexible than the side element 32. In other words, in the tire 2, the ratio (Hb/Hs) of the hardness Hb of the base layer 26 to the hardness Hs of the side element 32 is not greater than 100%. From the viewpoint of maintaining good steering stability and rollover resistance, the ratio (Hb/Hs) is preferably not less than 80% and more preferably not less than 85%.

In the tire 2, from the viewpoint that each shoulder land portion 50s can contribute to good steering stability and rollover resistance, the ratio (WS/TW) of the width WS of the shoulder land portion 50s to the ground-contact width TW of the tread 4 is preferably not less than 20% and more preferably not less than 25%. The ratio (WS/TW) is preferably not greater than 35% and more preferably not greater than 30%.

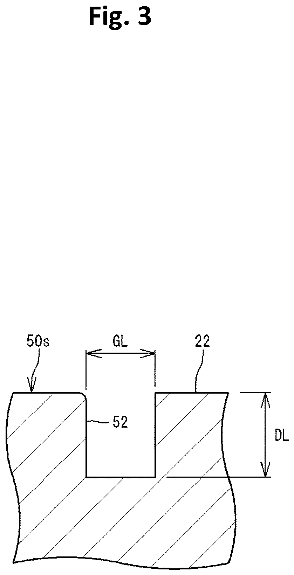

FIG. 3 shows a cross-sectional view taken along a line a-a in FIG. 2. FIG. 3 shows a cross-section of the lateral groove 52. In FIG. 3, a double-headed arrow GL represents the width of the lateral groove 52. A double-headed arrow DL represents the groove depth of the lateral groove 52. The width GL and the groove depth DL of the lateral groove 52 are specified in the cross-section of the lateral groove 52 at a position at which the lateral groove 52 has the maximum depth.

In the tire 2, the ratio (GL/GS) of the width GL of the lateral groove 52 to the width GS of the shoulder circumferential groove 48s is preferably not less than 45% and preferably not greater than 65%.

When the ratio (GL/GS) is set so as to be not less than 45%, the influence of the lateral groove 52 on the stiffness of the shoulder land portion 50s is suppressed. In the tire 2, good steering stability and rollover resistance are ensured. From this viewpoint, the ratio (GL/GS) is more preferably not less than 50%. When the ratio (GL/GS) is set so as to be not greater than 65%, the amount of air passing through the lateral groove 52 is reduced. The lateral groove 52 contributes to improvement of quietness. From this viewpoint, the ratio (GL/GS) is more preferably not greater than 60%.

In the tire 2, the ratio (DL/DS) of the depth DL of the lateral groove 52 to the depth DS of the shoulder circumferential groove 48s is preferably not less than 60% and preferably not greater than 80%.

When the ratio (DL/DS) is set so as to be not less than 60%, the influence of the lateral groove 52 on the stiffness of the shoulder land portion 50s is suppressed. In the tire 2, good steering stability and rollover resistance are ensured. From this viewpoint, the ratio (DL/DS) is more preferably not less than 65%. When the ratio (DL/DS) is set so as to be not greater than 80%, the amount of air passing through the lateral groove 52 is reduced. The lateral groove 52 contributes to improvement of quietness. From this viewpoint, the ratio (DL/DS) is more preferably not greater than 75%.

In the tire 2, from the viewpoint of achieving improvement of quietness while suppressing a decrease in steering stability and rollover resistance, more preferably, the ratio (GL/GS) of the width GL of the lateral groove 52 to the width GS of the shoulder circumferential groove 48s is not less than 45% and not greater than 65%, and the ratio (DL/DS) of the depth DL of the lateral groove 52 to the depth DS of the shoulder circumferential groove 48s is not less than 60% and not greater than 80%.

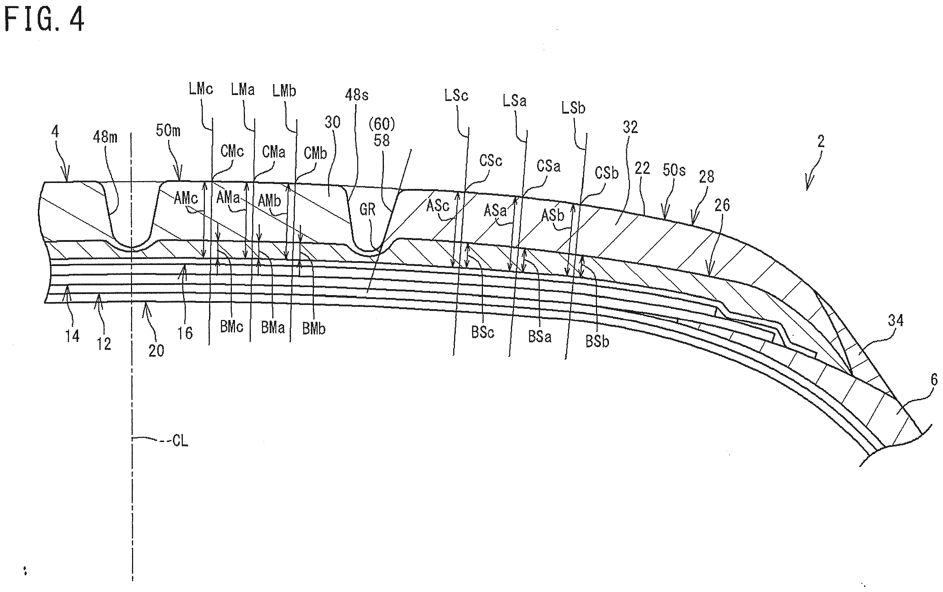

FIG. 4 shows a part of the tread 4 of the tire 2 shown in FIG. 1. In FIG. 4, the right-left direction is the axial direction of the tire 2, and the up-down direction is the radial direction of the tire 2. The direction perpendicular to the surface of the sheet of FIG. 4 is the circumferential direction of the tire 2.

In the tire 2, a side surface 58 of each shoulder land portion 50s is also a groove wall 60 of the shoulder circumferential groove 48s. The side surface 58 of the shoulder land portion 50s or the groove wall 60 of the shoulder circumferential groove 48s is the boundary between the shoulder circumferential groove 48s and the shoulder land portion 50s. In FIG. 4, this boundary is represented by a straight line indicated by reference character GR.

In the tire 2, a portion that is outward of the boundary GR in the axial direction is the shoulder land portion 50s. As shown in FIG. 4, in the tire 2, the cap layer 28 in the shoulder land portion 50s is composed of the flexible side element 32. The portion of the cap layer 28 that is inward of the boundary GR in the axial direction is composed of the hard center element 30. The boundary GR coincides with the boundary between the side element 32 and the center element 30 in the cap layer 28.

In the tire 2, the stiffness of the shoulder land portion 50s is appropriately reduced, so that the stiffness of the entirety of the tread 4 is well balanced. In the tire 2, required steering stability and rollover resistance are ensured. From this viewpoint, the cap layer 28 in the shoulder land portion 50s is preferably composed of the side element 32.

In FIG. 4, reference character CSa represents the position on the tread surface 22 at which the width WS of the shoulder land portion 50s is halved. The position CSa is the center of the shoulder land portion 50s. Reference character CSb and reference character CSc represent the positions away outwardly and inwardly from the center CSa, respectively, by a length equal to 25% of the width WS of the shoulder land portion 50s.

A solid line LSa is a normal line that is normal to the outer surface of the band 16 (or the inner surface of the tread 4) and passes through the center CSa. A double-headed arrow ASa represents the thickness from the band 16 to the tread surface 22, that is, the thickness of the tread 4, measured along the normal line LSa. A double-headed arrow BSa represents the thickness from the band 16 to the boundary between the base layer 26 and the cap layer 28, that is, the thickness of the base layer 26, measured along the normal line LSa. A solid line LSb is a normal line that is normal to the band 16 and passes through the position CSb. A double-headed arrow ASb represents the thickness of the tread 4 measured along the normal line LSb. A double-headed arrow BSb represents the thickness of the base layer 26 measured along the normal line LSb. A solid line LSc is a normal line that is normal to the band 16 and passes through the position CSc. A double-headed arrow ASc represents the thickness of the tread 4 measured along the normal line LSc. A double-headed arrow BSc represents the thickness of the base layer 26 measured along the normal line LSc. In the case where the groove 24 is located at a position at which the thickness of the tread 4 is measured, the thickness of the tread 4 is measured on the basis of a virtual tread surface obtained on the assumption that the groove 24 is not present.

In the tire 2, an average thickness AS of the tread 4 in the shoulder land portion 50s is obtained by calculating the average of the thickness ASa, the thickness ASb, and the thickness ASc. An average thickness BS of the base layer 26 in the shoulder land portion 50s is obtained by calculating the average of the thickness BSa, the thickness BSb, and the thickness BSc. In the tire 2, the ratio (BS/AS) of the average thickness BS of the base layer 26 to the average thickness AS of the tread 4 is a thickness ratio of the base layer 26 in the shoulder land portion 50s.

In FIG. 4, reference character CMa represents the position on the tread surface 22 at which the width WM of the middle land portion 50m is halved. The position CMa is the center of the middle land portion 50m. Reference character CMb and reference character CMc represent the positions away outwardly and inwardly from the center CMa, respectively, by a length equal to 25% of the width WM of the middle land portion 50m.

A solid line LMa is a normal line that is normal to the band 16 and passes through the center CMa. A double-headed arrow AMa represents the thickness of the tread 4 measured along the normal line LMa. A double-headed arrow BMa represents the thickness of the base layer 26 measured along the normal line LMa. A solid line LMb is a normal line that is normal to the band 16 and passes through the position CMb. A double-headed arrow AMb represents the thickness of the tread 4 measured along the normal line LMb. A double-headed arrow BMb represents the thickness of the base layer 26 measured along the normal line LMb. A solid line LMc is a normal line that is normal to the band 16 and passes through the position CMc. A double-headed arrow AMc represents the thickness of the tread 4 measured along the normal line LMc. A double-headed arrow BMc represents the thickness of the base layer 26 measured along the normal line LMc.

In the tire 2, an average thickness AM of the tread 4 in the middle land portion 50m is obtained by calculating the average of the thickness AMa, the thickness AMb, and the thickness AMc. An average thickness BM of the base layer 26 in the middle land portion 50m is obtained by calculating the average of the thickness BMa, the thickness BMb, and the thickness BMc. In the tire 2, the ratio (BM/AM) of the average thickness BM of the base layer 26 to the average thickness AM of the tread 4 is a thickness ratio of the base layer 26 in the middle land portion 50m.

In the tire 2, the thickness ratio (BS/AS) of the base layer 26 in the shoulder land portion 50s is preferably higher than the thickness ratio (BM/AM) of the base layer 26 in the middle land portion 50m. Accordingly, the stiffness of the shoulder land portion 50s is appropriately reduced, so that the stiffness of the entirety of the tread 4 is well balanced. In the tire 2, required steering stability and rollover resistance are sufficiently ensured. From this viewpoint, the difference between the thickness ratio (BS/AS) of the base layer 26 in the shoulder land portion 50s and the thickness ratio (BM/AM) of the base layer 26 in the middle land portion 50m is preferably not less than 5% and preferably not greater than 10%.

In the tire 2, the thickness ratio (BS/AS) of the base layer 26 in the shoulder land portion 50s is preferably not less than 20% and not greater than 45%.

When the thickness ratio (BS/AS) is set so as to be not less than 20%, the base layer 26 in the shoulder land portion 50s effectively contributes to ensuring steering stability and rollover resistance. From this viewpoint, the thickness ratio (BS/AS) is more preferably not less than 25%.

When the thickness ratio (BS/AS) is set so as to be not greater than 45%, the stiffness of the shoulder land portion 50s is appropriately maintained. In the tire 2, good steering stability is maintained, and an increase in rolling resistance is minimized. From this viewpoint, the thickness ratio (BS/AS) is more preferably not greater than 40%.

In the tire 2, from the viewpoint of well balancing steering stability and ride comfort, the thickness ratio (BM/AM) of the base layer 26 in the middle land portion 50m is preferably not less than 10% and preferably not greater than 30%. The ratio (BM/AM) is more preferably not less than 15% and more preferably not greater than 25%.

In the tire 2, a large number of sipes can be formed on the tread 4 in addition to the circumferential grooves 48 and the lateral grooves 52. As shown in FIG. 2, a plurality of dead-end sipes 62 are preferably formed on each shoulder land portion 50s of the tire 2. In the tire 2, the dead-end sipes 62 formed on each shoulder land portion 50s are also referred to as shoulder dead-end sipes.

In the tire 2, on each shoulder land portion 50s, the plurality of shoulder dead-end sipes 62 are located at intervals in the circumferential direction. As shown in FIG. 2, in the tire 2, one or two shoulder dead-end sipes 62 are located between one lateral groove 52 and another lateral groove 52 located adjacent to the one lateral groove 52. Although not described in detail, the arrangement of the plurality of shoulder dead-end sipes 62 on the shoulder land portion 50s is determined as appropriate in consideration of the influence on performance such as uniformity.

Each shoulder dead-end sipe 62 has an end portion within the shoulder land portion 50s. The shoulder dead-end sipe 62 extends from the end portion toward the end of the tread 4. The shoulder dead-end sipe 62 includes a curved portion 64 that includes the end portion and is inclined relative to the axial direction, and a straight portion 66 that is connected to the curved portion 64 and extends in the axial direction. In the tire 2, the curved portion 64 is shaped such that the angle of the curved portion 64 relative to the axial direction gradually increases toward the equator side. The edges of the shoulder dead-end sipe 62 contribute to ensuring the traction performance of the tire 2.

The shoulder dead-end sipe 62 is inclined relative to the axial direction as a whole. In FIG. 2, reference character θ2 represents the inclination angle of the shoulder dead-end sipe 62. The inclination angle θ2 is represented as an angle, relative to the axial direction, of a straight line connecting an axially outer end 62s of the shoulder dead-end sipe 62 and an axially inner end 62u of the shoulder dead-end sipe 62. Although not shown, the outer end 62s and the inner end 62u of the shoulder dead-end sipe 62 are specified on a groove width center line of the shoulder dead-end sipe 62. In the tire 2, the position at which the shoulder dead-end sipe 62 and a straight line representing the end Te of the ground-contact surface intersect each other is used as the axially outer end 62s of the shoulder dead-end sipe 62.

In the tire 2, from the viewpoint of balancing noise performance and steering stability well while ensuring traction performance, the inclination angle θ2 of the shoulder dead-end sipe 62 is preferably not less than 5° and preferably not greater than 15°.

In FIG. 2, a double-headed arrow SS represents the length in the axial direction of the shoulder dead-end sipe 62 of the shoulder land portion 50s. In the tire 2, the length SS is represented as the distance in the axial direction, from the inner end 62u of the shoulder dead-end sipe 62 to the outer end 62s of the shoulder dead-end sipe 62, measured along the tread surface 22.

In the tire 2, the length SS in the axial direction of the shoulder dead-end sipe 62 is set as appropriate in consideration of the specifications of the tire 2, etc. From the viewpoint of well balancing noise performance and steering stability while ensuring traction performance, the length SS in the axial direction of the shoulder dead-end sipe 62 is preferably not less than 70% and not greater than 80% of the width WS of the shoulder land portion 50s.

In the tire 2, preferably, a plurality of dead-end sipes 68 and a circumferential sipe 70 are formed on each middle land portion 50m. On the middle land portion 50m, each dead-end sipe 68 and the circumferential sipe 70 do not intersect each other.

The circumferential sipe 70 is located at the center in the width direction of the middle land portion 50m. The circumferential sipe 70 extends in the circumferential direction. Preferably, the depth of the circumferential sipe 70 is not greater than 3.0 mm. Preferably, the width of the circumferential sipe 70 is not less than 0.5 mm and not greater than 1.0 mm.

In the tire 2, the plurality of dead-end sipes 68 formed on each middle land portion 50m include a plurality of first dead-end sipes 72 formed on an outer portion of the middle land portion 50m in the axial direction, and a plurality of second dead-end sipes 74 formed on an inner portion of the middle land portion 50m in the axial direction. The above-described circumferential sipe 70 is located between the first dead-end sipes 72 and the second dead-end sipes 74 in the axial direction.

The plurality of first dead-end sipes 72 are located at intervals in the circumferential direction. Each first dead-end sipe 72 has an end portion within the middle land portion 50m. This end portion is located outward of the above-described circumferential sipe 70 in the axial direction. The first dead-end sipe 72 extends from this end portion toward the shoulder circumferential groove 48s. The first dead-end sipe 72 connects this end portion and the shoulder circumferential groove 48s. The first dead-end sipe 72 is inclined relative to the axial direction. The direction of inclination of the first dead-end sipe 72 is opposite to that of each shoulder dead-end sipe 62 formed on the shoulder land portion 50s. The edges of the first dead-end sipe 72 contribute to ensuring the traction performance of the tire 2.

In FIG. 2, reference character θ3 represents the inclination angle of the first dead-end sipe 72. The inclination angle θ3 is represented as an angle, relative to the axial direction, of a straight line connecting an axially outer end 72s of the first dead-end sipe 72 and an axially inner end 72u of the first dead-end sipe 72. Although not shown, the outer end 72s and the inner end 72u of the first dead-end sipe 72 are specified on a groove width center line of the first dead-end sipe 72.

In the tire 2, from the viewpoint of balancing noise performance and steering stability well while ensuring traction performance, the inclination angle θ3 of the first dead-end sipe 72 is preferably not less than 15° and preferably not greater than 25°.

In the tire 2, the depth of the first dead-end sipe 72 is preferably not less than 50% and not greater than 90% of the groove depth DS of the shoulder circumferential groove 48s. The width of the first dead-end sipe 72 is preferably not less than 0.5 mm and not greater than 1.0 mm.

The plurality of second dead-end sipes 74 are located at intervals in the circumferential direction. Each second dead-end sipe 74 has an end portion within the middle land portion 50m. This end portion is located inward of the above-described circumferential sipe 70 in the axial direction. The second dead-end sipe 74 extends from this end portion toward the middle circumferential groove 48m. The second dead-end sipe 74 connects this end portion and the middle circumferential groove 48m. The second dead-end sipe 74 is inclined relative to the axial direction. In the tire 2, the direction of inclination of each first dead-end sipe 72 and the direction of inclination of each second dead-end sipe 74 are the same. The edges of the second dead-end sipe 74 contribute to ensuring the traction performance of the tire 2.

In FIG. 2, reference character θ4 represents the inclination angle of the second dead-end sipe 74. The inclination angle θ4 is represented as an angle, relative to the axial direction, of a straight line connecting an axially outer end 74s of the second dead-end sipe 74 and an axially inner end 74u of the second dead-end sipe 74. Although not shown, the outer end 74s and the inner end 74u of the second dead-end sipe 74 are specified on a groove width center line of the second dead-end sipe 74.

In the tire 2, from the viewpoint of balancing noise performance and steering stability well while ensuring traction performance, the inclination angle θ4 of the second dead-end sipe 74 is preferably not less than 30° and preferably not greater than 40°.

In the tire 2, the depth of the second dead-end sipe 74 is preferably not less than 50% and not greater than 90% of the groove depth DM of the middle circumferential groove 48m. The width of the second dead-end sipe 74 is preferably not less than 0.5 mm and not greater than 1.0 mm.

In FIG. 2, a double-headed arrow S1 represents the length in the axial direction of the first dead-end sipe 72 of the middle land portion 50m. A double-headed arrow S2 represents the length in the axial direction of the second dead-end sipe 74 of the middle land portion 50m.

In the tire 2, the length S1 in the axial direction of the first dead-end sipe 72 and the length S2 in the axial direction of the second dead-end sipe 74 are set as appropriate in consideration of the specifications of the tire 2, etc. From the viewpoint of balancing noise performance and steering stability well while ensuring traction performance, the length S1 in the axial direction of the first dead-end sipe 72 is preferably not less than 30% and not greater than 40% of the width WM of the middle land portion 50m. From the same viewpoint, the length S2 in the axial direction of the second dead-end sipe 74 is preferably not less than 30% and not greater than 40% of the width WM of the middle land portion 50m.

The tread pattern of the tire 2 is an asymmetric pattern. When the tire 2 is mounted on a vehicle, the tire 2 is mounted on the vehicle such that the end Te of the ground-contact surface located on the right side in FIG. 2 is located on the inner side of the vehicle. In the tire 2, a shoulder land portion 50su located on the inner side of the vehicle is also referred to as an inner shoulder land portion, and a shoulder land portion 50ss located on the outer side of the vehicle is also referred to as an outer shoulder land portion. A middle land portion 50mu located on the inner side of the vehicle is also referred to as an inner middle land portion, and a middle land portion 50ms located on the outer side of the vehicle is also referred to as an outer middle land portion.

As shown in FIG. 2, the direction of inclination of each groove 24 provided on the inner shoulder land portion 50su is the same as that of each groove 24 provided on the outer shoulder land portion 50ss. The direction of inclination of each groove 24 provided on the inner middle land portion 50mu is the same as that of each groove 24 provided on the outer middle land portion 50ms.

As shown in FIG. 2, in the tire 2, in the middle land portion 50m located on the inner side of the vehicle when the tire 2 is mounted on the vehicle, that is, in the inner middle land portion 50mu, the number of second dead-end sipes 74 included in the inner middle land portion 50mu is equal to the number of first dead-end sipes 72 included therein. On the other hand, in the middle land portion 50m located on the outer side the vehicle when the tire 2 is mounted on the vehicle, that is, in the outer middle land portion 50ms, the number of second dead-end sipes 74 included in the outer middle land portion 50ms is larger than the number of first dead-end sipes 72 included therein. In the tire 2, since the stiffness of the entirety of the tread 4 is well balanced, improvement of steering stability and rollover resistance is achieved. From this viewpoint, the ratio of the number of first dead-end sipes 72 included in the outer middle land portion 50ms to the number of second dead-end sipes 74 included in the outer middle land portion 50ms is preferably not less than 1/4 and preferably not greater than 1/2. From the same viewpoint, the ratio of the depth of each second dead-end sipe 74 included in the outer middle land portion 50ms to the groove depth DM of the middle circumferential groove 48m is preferably not less than 50% and preferably not greater than 60%.

Since each lateral groove 52 has an end portion within the shoulder land portion 50s as described above, the lateral groove 52 acts so as to increase the stiffness of the shoulder land portion 50s as compared to a lateral groove that traverses a shoulder land portion.

As shown in FIG. 2, in the tire 2, preferably, open sipes 76 connecting the lateral grooves 52 and the shoulder circumferential groove 48s are formed on the shoulder land portion 50s located on the inner side of the vehicle when the tire 2 is mounted on the vehicle, that is, on the inner shoulder land portion 50su. Each of the open sipes 76 acts so as to reduce the stiffness of the inner shoulder land portion 50su.

In the tire 2, each lateral groove 52 and each open sipe 76 are contiguous to each other. The lateral groove 52 and the open sipe 76 form a composite groove that traverses the inner shoulder land portion 50su. An increase in the stiffness of the inner shoulder land portion 50su due to the provision of the lateral grooves 52 having an end portion within the inner shoulder land portion 50su, is effectively suppressed. Since the groove width of the open sipe 76 is smaller than the groove width of the lateral groove 52, the stiffness of the inner shoulder land portion 50su is prevented from being reduced more than necessary. In the tire 2, required steering stability and rollover resistance are ensured.

Furthermore, the groove width of the open sipe 76 is not greater than 1.5 mm. Unlike the lateral groove 52 having a groove width of at least 2.0 mm or greater, almost no air passes through the open sipe 76. The influence of the open sipe 76 on the quietness of the tire 2 is small. Thus, in the tire 2, even though the lateral groove 52 and the shoulder circumferential groove 48s are connected to each other by the open sipe 76, the flow of air in the lateral groove 52 is limited. In the tire 2, improvement of quietness is achieved.

As shown in FIG. 2, in the tire 2, no open sipes 76 connecting the lateral grooves 52 and the shoulder circumferential groove 48s are formed on the shoulder land portion 50s located on the outer side of the vehicle when the tire 2 is mounted on the vehicle, that is, on the outer shoulder land portion 50ss. In the tire 2, open sipes 76 connecting the lateral grooves 52 and the shoulder circumferential groove 48s may be formed on the outer shoulder land portion 50ss.

In the tire 2, from the viewpoint that each open sipe 76 can effectively contribute to control of the stiffness of the inner shoulder land portion 50su, the ratio of the depth of the open sipe 76 to the groove depth DS of the shoulder circumferential groove 48s is preferably not less than 50% and preferably not greater than 60%. From the same viewpoint, the width of the open sipe 76 is preferably not less than 0.5 mm and preferably not greater than 1.0 mm.

In FIG. 2, a double-headed arrow LP represents the length in the axial direction of the open sipe 76. In the tire 2, the length LP is represented as the distance in the axial direction, from an inner end 76u of the open sipe 76 to an outer end 76s of the open sipe 76, measured along the tread surface 22.

In the tire 2, the ratio (LP/WS) of the length LP in the axial direction of the open sipe 76 to the width WS of the inner shoulder land portion 50su is preferably not less than 25% and preferably not greater than 40%.

When the ratio (LP/WS) is set so as to be not less than 25%, the volume of each lateral groove 52 included in the inner shoulder land portion 50su is reduced, so that improvement of quietness is achieved. From this viewpoint, the ratio (LP/WS) is more preferably not less than 30%.

When the ratio (LP/WS) is set so as to be not greater than 40%, the influence, of the composite groove formed by the open sipe 76 and the lateral groove 52, on the stiffness of the inner shoulder land portion 50su is suppressed, so that the stiffness of the entirety of the tread 4 is well balanced. In the tire 2, required steering stability and rollover resistance are ensured. From this viewpoint, the ratio (LP/WS) is more preferably not greater than 35%.

In the tire 2, similar to each lateral groove 52, specifically, similar to the curved portion 54 of each lateral groove 52, each open sipe 76 is inclined relative to the axial direction. The direction of inclination of the open sipe 76 is the same as that of the curved portion 54. The open sipe 76 and the lateral groove 52 are smoothly connected to each other.

In the tire 2, the open sipe 76 is shaped such that the angle of the open sipe 76 relative to the axial direction gradually increases toward the equator side. The open sipe 76 contributes to steering stability.

In FIG. 2, reference character θ5 represents the inclination angle of the open sipe 76. The inclination angle θ5 is represented as an angle, relative to the axial direction, of a straight line connecting an axially outer end 76s of the open sipe 76 and an axially inner end 76u of the open sipe 76. Although not shown, the outer end 76s and the inner end 76u of the open sipe 76 are specified on a groove width center line of the open sipe 76.

In the tire 2, from the viewpoint of balancing noise performance and steering stability well while ensuring traction performance, the inclination angle θ5 of the open sipe 76 is preferably not less than 10° and preferably not greater than 20°.

As described above, according to the present invention, the pneumatic tire 2 in which improvement of quietness is achieved while a decrease in steering stability is suppressed, is obtained. In particular, in the tire 2, improvement of quietness is achieved while required steering stability and rollover resistance are ensured. The tire 2 is also suitable for use as a tire for an electric vehicle in addition to a tire for an automobile in which an engine is used as a power generator.

### EXAMPLES

Hereinafter, the present invention will be described in further detail by means of examples

### [Example 1]

A pneumatic tire for a passenger car (tire size = 185/65R15) having the basic structure shown in FIG. 1 and having specifications shown in Table 1 below was obtained.

In Example 1, the ratio (Hs/Hc) of the hardness Hs of the side element 32 to the hardness Hc of the center element 30 was 90%. The ratio (Hb/Hs) of the hardness Hb of the base layer 26 to the hardness Hs of the side element 32 was 93%. The hardness Hc of the center element 30 was 64.

In Example 1, the ratio (WS/TW) of the width WS of the shoulder land portion to the ground-contact width TW of the tread was 28%. On the shoulder land portion, lateral grooves having an end portion within the shoulder land portion and extending from the end portion toward the end of the tread were provided. This is represented as "Y" in the cell for lateral groove in Table 1. The ratio (GL/GS) of the width GL of the lateral groove to the width GS of the shoulder circumferential groove was 56%. The ratio (DL/DS) of the depth DL of the lateral groove to the depth DS of the shoulder circumferential groove was 73%.

In Example 1, open sipes connecting the lateral grooves and the shoulder circumferential grooves were formed on the inner shoulder land portion. This is represented as "Y" in the cell for open sipe in Table 1. The ratio (LP/WS) of the length LP in the axial direction of the open sipe to the width WS of the inner shoulder land portion was 33%.

In Example 1, the thickness ratio (BM/AM) of the base layer in the middle land portion was 20%. The thickness ratio (BS/AS) of the base layer in the shoulder land portion was 30%.

### [Comparative Example 1]

A tire of Comparative Example 1 was obtained in the same manner as Example 1, except that the same material as that of the center element was used for the side element, the ratio (Hs/Hc) and the ratio (Hb/Hs) were set as shown in Table 1 below, the ratio (GL/GS) and the ratio (BS/AS) were set as shown in Table 1 below, and no open sipe was provided. No open sipe being provided is represented as "N" in the cell for open sipe in Table 1.

### [Comparative Example 2]

A tire of Comparative Example 2 was obtained in the same manner as Example 1, except that each lateral groove was formed as a lateral groove traversing the shoulder land portion. Each lateral groove being formed as a lateral groove traversing the shoulder land portion is represented as "N" in the cell for lateral groove in Table 1. Also, in Comparative Example 2, no open sipe was provided.

### [Example 2]

A tire of Example 2 was obtained in the same manner as Example 1, except that no open sipe was provided.

### [Examples 3 and 4 and Comparative Examples 3 and 4]

Tires of Examples 3 and 4 and Comparative Examples 3 and 4 were obtained in the same manner as Example 1, except that the hardness Hs of the side element was changed such that the ratio (Hs/Hc) and the ratio (Hb/Hs) were set as shown in Tables 1 and 2 below. In Comparative Example 4, the side element was formed from the same material as that of the center element.

### [Example 5]

A tire of Example 5 was obtained in the same manner as Example 1, except that the ratio (GL/GS) was set as shown in Table 2 below.

### [Example 6]

A tire of Example 6 was obtained in the same manner as Example 1, except that the ratio (DL/DS) was set as shown in Table 2 below.

### [Examples 7 to 10]

Tires of Examples 7 to 10 were obtained in the same manner as Example 1, except that the thickness ratio (BS/AS) was set as shown in Table 2 below.

### [Rolling Resistance (RRC)]

The rolling resistance coefficient (RRC) when each test tire was run on a drum at a speed of 80 km/h under the following conditions was measured using a rolling resistance tester. The results are indicated as indexes in Tables 1 and 2 below. A lower value represents that the rolling resistance is smaller.
Rim: 15×5.5J
Internal pressure: 210 kPa
Vertical load: 4.39 kN

### [Steering Stability]

Test tires were fitted onto rims (size = 15×5.5J) and inflated with air to adjust the internal pressures thereof (front wheels = 230 kPa, rear wheels = 210 kPa). These tires were mounted to an electric vehicle (one occupant) as a test vehicle, and the vehicle was driven on a test course having a dry asphalt road surface. The driver made evaluation (sensory evaluation) for steering stability. The results are indicated as indexes in the cells for "steering stability" in Tables 1 and 2 below. A higher value represents that the steering stability is better.

### [Rollover Resistance]

Test tires were fitted onto rims (size = 15×5.5J) and inflated with air to adjust the internal pressures thereof (front wheels = 230 kPa, rear wheels = 210 kPa). These tires were mounted to an electric vehicle (one occupant) as a test vehicle, the vehicle was driven at a constant speed on a J-turn road having a dry asphalt road surface, and the rollover limit speed when steered 180° was measured. The results are indicated as indexes in the cells for "rollover resistance" in Tables 1 and 2 below. A higher value represents that the rollover resistance is better.

### [Quietness]

Test tires were fitted onto rims (size = 15×5.5J) and inflated with air to adjust the internal pressures thereof (front wheels = 230 kPa, rear wheels = 210 kPa) These tires were mounted to an electric vehicle (one occupant) as a test vehicle, and the vehicle was driven at a speed of 60 km/h on a test course having a dry asphalt road surface. At that time, the sound pressure level of the sound inside the vehicle having a frequency of 800 Hz or higher was measured at an ear position on the driver's seat window side. The results are indicated as indexes in the cells for "quietness" in Tables 1 and 2 below. A higher value represents that the sound pressure level is lower and that the quietness is better.

**[Table 1]**

| | Comparative Example 1 | Comparative Example 2 | Example 2 | Comparative Example 3 | Example 3 | Example 1 | Example 4 |
|---|---|---|---|---|---|---|---|
| Hs/Hc [%] | 100 | 90 | 90 | 85 | 85 | 90 | 95 |
| Hb/Hs [%] | 84 | 93 | 93 | 107 | 100 | 93 | 89 |
| Lateral groove | Y | N | Y | Y | Y | Y | Y |
| GL/GS [%] | 80 | 56 | 56 | 56 | 56 | 56 | 56 |
| DL/DS [%] | 73 | 73 | 73 | 73 | 73 | 73 | 73 |
| Open sipe | N | N | N | Y | Y | Y | Y |
| LP/WS [%] | - | - | - | 33 | 33 | 33 | 33 |
| BM/AM [%] | 20 | 20 | 20 | 20 | 20 | 20 | 20 |
| BS/AS [%] | 20 | 30 | 30 | 30 | 30 | 30 | 30 |
| RRC | 100 | 100 | 100 | 100 | 100 | 100 | 100 |
| Steering stability | 100 | 105 | 105 | 95 | 110 | 110 | 110 |
| Rollover resistance | 100 | 110 | 100 | 100 | 110 | 110 | 105 |
| Quietness | 100 | 90 | 115 | 110 | 110 | 110 | 110 |

**[Table 2]**

| | Comparative Example 4 | Example 5 | Example 6 | Example 7 | Example 8 | Example 9 | Example 10 |
|---|---|---|---|---|---|---|---|
| Hs/Hc [%] | 100 | 90 | 90 | 90 | 90 | 90 | 90 |
| Hb/Hc [%] | 84 | 93 | 93 | 93 | 93 | 93 | 93 |
| Lateral groove | Y | Y | Y | Y | Y | Y | Y |
| GL/GS [%] | 56 | 80 | 56 | 56 | 56 | 56 | 56 |
| DL/DS [%] | 73 | 73 | 60 | 73 | 73 | 73 | 73 |
| Open sipe | Y | Y | Y | Y | Y | Y | Y |
| LP/WS [%] | 33 | 33 | 33 | 33 | 33 | 33 | 33 |
| BM/AM [%] | 20 | 20 | 20 | 20 | 20 | 20 | 20 |
| BS/AS [%] | 30 | 30 | 30 | 20 | 25 | 40 | 45 |
| RRC | 100 | 100 | 100 | 98 | 100 | 102 | 102 |
| Steering stability | 100 | 105 | 105 | 105 | 110 | 105 | 100 |
| Rollover resistance | 95 | 110 | 100 | 105 | 110 | 115 | 115 |
| Quietness | 110 | 105 | 115 | 110 | 110 | 110 | 110 |

As shown in Tables 1 and 2, in each Example, improvement of quietness is achieved while required steering stability and rollover resistance are ensured. From the evaluation results, advantages of the present invention are clear.

The above-described technology for achieving improvement of quietness while ensuring required steering stability and rollover resistance can also be applied to various tires.

## Claims

1. A pneumatic tire (2) comprising a tread (4) having a base layer (26) and a cap layer (28) located radially outward of the base layer (26), wherein
the cap layer (28) includes a center element (30) and a pair of side elements (32) located outward of the center element (30) in an axial direction, and
each side element (32) is more flexible than the center element (30),
**characterized in that**
a hardness (Hb) of the base layer (26) is equal to a hardness (Hs) of each side element (32), or the base layer (26) is more flexible than each side element (32), when the hardness (Hb, Hs) is measured according to the standards of JIS K6253 under a temperature condition of 23°C using a type A durometer,
a plurality of circumferential grooves (48, 48s, 48m) are formed on the tread (4), whereby a plurality of land portions (50, 50s, 50ss, 50su, 50m, 50ms, 50mu) are formed in the tread (4),
among the plurality of circumferential grooves (48, 48s, 48m), a circumferential groove located on each outer side in the axial direction is a shoulder circumferential groove (48s),
among the plurality of land portions (50, 50s, 50ss, 50su, 50m, 50ms, 50mu), a land portion located on each outer side in the axial direction is a shoulder land portion (50s, 50ss, 50su), and a land portion located inward of the shoulder land portion (50s, 50ss, 50su) is a middle land portion (50m, 50ms, 50mu),
the cap layer (28) in the shoulder land portion (50s, 50ss, 50su) includes the side element (32),
a plurality of lateral grooves (52) are formed on the shoulder land portion (50s, 50ss, 50su), and
the plurality of lateral grooves (52) each have an end portion within the shoulder land portion (50s, 50ss, 50su) and extend from the end portion toward an end of the tread (4).

2. The pneumatic tire (2) according to claim 1, wherein a ratio of the hardness (Hs) of each side element (32) to a hardness (Hc) of the center element (30) is not less than 85% and not greater than 98%.

3. The pneumatic tire (2) according to claim 1 or 2, wherein
a ratio of a width (GL) of each lateral groove (52) to a width (GS) of the shoulder circumferential groove (48s) is not less than 45% and not greater than 65%, and
a ratio of a depth (DL) of each lateral groove (52) to a depth (DS) of the shoulder circumferential groove (48s) is not less than 60% and not greater than 80%.

4. The pneumatic tire (2) according to any one of claims 1 to 3, wherein an open sipe (76) connecting each lateral groove (52) and the shoulder circumferential groove (48s) is formed on a shoulder land portion (50su) located on an inner side of a vehicle when the pneumatic tire (2) is mounted on the vehicle.

5. The pneumatic tire (2) according to claim 4, wherein a ratio of a length (LP) in the axial direction of the open sipe (76) to a width (WS) of the shoulder land portion (50su) is not less than 25% and not greater than 40%.

6. The pneumatic tire (2) according to any one of claims 1 to 5, wherein a ratio of the width (WS) of the shoulder land portion (50s, 50ss, 50su) to a ground-contact width (TW) of the tread (4) is not less than 20% and not greater than 35%.

7. The pneumatic tire (2) according to any one of claims 1 to 6, wherein a ratio (BS/AS) of the average thickness (BS) of the base layer (26) and the average thickness (AS) of the tread (4) in the shoulder land portion (50s, 50ss, 50su) is higher than a ratio (BM/AM) of the average thickness (BM) of the base layer (26) and the average thickness (AM) of the tread (4) in the middle land portion (50m, 50ms, 50mu).

8. The pneumatic tire (2) according to claim 7, wherein a difference between the ratio (BS/AS) of the average thickness (BS) of the base layer (26) and the average thickness (AS) of the tread (4) in the shoulder land portion (50s, 50ss, 50su) and the ratio (BM/AM) of the average thickness (BM) of the base layer (26) and the average thickness (AM) of the tread (4) in the middle land portion (50m, 50ms, 50mu) is not less than 5% and not greater than 10%.

9. The pneumatic tire (2) according to any one of claims 1 to 8, wherein the cap layer (28) in the shoulder land portion (50s, 50ss, 50su) is composed of the side element (32).

10. The pneumatic tire (2) according to any one of claims 1 to 9, wherein
the plurality of circumferential grooves (48, 48s, 48m) include a middle circumferential groove (48m) located inward of the shoulder circumferential groove (48s) in the axial direction,
a portion between the shoulder circumferential groove (48s) and the middle circumferential groove (48m) is the middle land portion (50m, 50ms, 50mu),
a plurality of dead-end sipes (68) are formed on the middle land portion (50m, 50ms, 50mu),
the dead-end sipes (68) include first dead-end sipes (72) each having an end portion within the middle land portion (50m, 50ms, 50mu) and connecting the end portion and the shoulder circumferential groove (48s), and second dead-end sipes (74) each having an end portion within the middle land portion (50m, 50ms, 50mu) and connecting the end portion and the middle circumferential groove (48m), and
in a middle land portion (50ms) located on an outer side of the vehicle when the pneumatic tire (2) is mounted on the vehicle, the number of the second dead-end sipes (74) formed on the middle land portion (50ms) is larger than the number of the first dead-end sipes (72) formed thereon.

## Patentansprüche

1. Luftreifen (2) mit einer Lauffläche (4), die eine Basisschicht (26) und eine Deckschicht (28) aufweist, die radial außerhalb der Basisschicht (26) angeordnet ist, wobei
die Deckschicht (28) ein Mittelelement (30) und ein Paar Seitenelemente (32) umfasst, die in einer axialen Richtung außerhalb des Mittelelements (30) angeordnet sind, und
jedes Seitenelement (32) flexibler als das Mittelelement (30) ist,
**dadurch gekennzeichnet, dass**
eine Härte (Hb) der Basisschicht (26) gleich einer Härte (Hs) jedes Seitenelements (32) ist, oder die Basisschicht (26) flexibler als jedes Seitenelement (32) ist, wenn die Härte (Hb, Hs) gemäß den Standards von JIS K6253 unter einer Temperaturbedingung von 23°C unter Verwendung eines Durometers vom Typ A gemessen wird,
eine Vielzahl von Umfangsrillen (48, 48s, 48m) auf der Lauffläche (4) gebildet sind, wodurch eine Vielzahl von Landabschnitten (50, 50s, 50ss, 50su, 50m, 50ms, 50mu) in der Lauffläche (4) gebildet sind,
unter der Vielzahl von Umfangsrillen (48, 48s, 48m) eine Umfangsrille, die sich auf jeder Außenseite in der axialen Richtung befindet, eine Schulterumfangsrille (48s) ist,
unter der Vielzahl von Landabschnitten (50, 50s, 50ss, 50su, 50m, 50ms, 50mu) ein Landabschnitt, der sich auf jeder äußeren Seite in der axialen Richtung befindet, ein Schulterlandabschnitt (50s, 50ss, 50su) ist, und ein Landabschnitt, der sich innen von dem Schulterlandabschnitt (50s, 50ss, 50su) befindet, ein mittlerer Landabschnitt (50m, 50ms, 50mu) ist,
die Deckschicht (28) in dem Schulterlandabschnitt (50s, 50ss, 50su) das Seitenelement (32) enthält,
eine Vielzahl von Querrillen (52) auf dem Schulterlandabschnitt (50s, 50ss, 50su) gebildet sind, und
die Vielzahl von Querrillen (52) jeweils einen Endabschnitt innerhalb des Schulterlandabschnitts (50s, 50ss, 50su) aufweisen und sich von dem Endabschnitt zu einem Ende der Lauffläche (4) erstrecken.

2. Luftreifen (2) nach Anspruch 1, wobei ein Verhältnis der Härte (Hs) jedes Seitenelements (32) zu einer Härte (Hc) des Mittelelements (30) nicht weniger als 85 % und nicht mehr als 98 % beträgt.

3. Luftreifen (2) nach Anspruch 1 oder 2, wobei
ein Verhältnis einer Breite (GL) jeder Querrille (52) zu einer Breite (GS) der Schulterumfangsrille (48s) nicht weniger als 45 % und nicht mehr als 65 % beträgt, und
ein Verhältnis zwischen einer Tiefe (DL) jeder Querrille (52) und einer Tiefe (DS) der Schulterumfangsrille (48s) nicht weniger als 60% und nicht mehr als 80% beträgt.

4. Luftreifen (2) nach einem der Ansprüche 1 bis 3, wobei ein offener Feinschnitt (76), der jede Querrille (52) und die Schulterumfangsrille (48s) verbindet, auf einem Schulterlandabschnitt (50su) gebildet ist, der sich auf einer Innenseite eines Fahrzeugs befindet, wenn der Luftreifen (2) an dem Fahrzeug montiert ist.

5. Luftreifen (2) nach Anspruch 4, wobei ein Verhältnis einer Länge (LP) in der axialen Richtung des offenen Feinschnitts (76) zu einer Breite (WS) des Schulterlandabschnitts (50su) nicht weniger als 25% und nicht mehr als 40% beträgt.

6. Luftreifen (2) nach einem der Ansprüche 1 bis 5, wobei ein Verhältnis der Breite (WS) des Schulterlandabschnitts (50s, 50ss, 50su) zu einer Bodenkontaktbreite (TW) der Lauffläche (4) nicht weniger als 20% und nicht mehr als 35% beträgt.

7. Luftreifen (2) nach einem der Ansprüche 1 bis 6, wobei ein Verhältnis (BS/AS) der durchschnittlichen Dicke (BS) der Basisschicht (26) und der durchschnittlichen Dicke (AS) der Lauffläche (4) in dem Schulterlandabschnitt (50s, 50ss, 50su) größer ist als ein Verhältnis (BM/AM) der durchschnittlichen Dicke (BM) der Basisschicht (26) und der durchschnittlichen Dicke (AM) der Lauffläche (4) in dem mittleren Landabschnitt (50m, 50ms, 50mu).

8. Luftreifen (2) nach Anspruch 7, wobei eine Differenz zwischen dem Verhältnis (BS/AS) der durchschnittlichen Dicke (BS) der Basisschicht (26) und der durchschnittlichen Dicke (AS) der Lauffläche (4) in dem Schulterlandabschnitt (50s, 50ss, 50su) und dem Verhältnis (BM/AM) der durchschnittlichen Dicke (BM) der Basisschicht (26) und der durchschnittlichen Dicke (AM) der Lauffläche (4) in dem mittleren Landabschnitt (50m, 50ms, 50mu) nicht weniger als 5% und nicht mehr als 10% beträgt.

9. Luftreifen (2) nach einem der Ansprüche 1 bis 8, wobei die Deckschicht (28) in dem Schulterlandabschnitt (50s, 50ss, 50su) aus dem Seitenelement (32) besteht.

10. Luftreifen (2) nach einem der Ansprüche 1 bis 9, wobei
die Vielzahl von Umfangsrillen (48, 48s, 48m) eine mittlere Umfangsrille (48m) umfassen, die in der axialen Richtung innen von der Schulterumfangsrille (48s) angeordnet ist,
ein Abschnitt zwischen der Schulterumfangsrille (48s) und der mittleren Umfangsrille (48m) der mittlere Landabschnitt (50m, 50ms, 50mu) ist,
eine Vielzahl von blind endenden Feinschnitten (68) auf dem mittleren Landabschnitt (50m, 50ms, 50mu) gebildet sind,
die blind endenden Feinschnitte (68) erste blind endende Feinschnitte (72) umfassen, die jeweils einen Endabschnitt innerhalb des mittleren Landabschnitts (50m, 50ms, 50mu) aufweisen und den Endabschnitt und die Schulterumfangsrille (48s) verbinden, und zweite blind endende Feinschnitte (74), die jeweils einen Endabschnitt innerhalb des mittleren Landabschnitts (50m, 50ms, 50mu) aufweisen und den Endabschnitt und die mittlere Umfangsrille (48m) verbinden, und
in einem mittleren Landabschnitt (50ms), der sich auf einer Außenseite des Fahrzeugs befindet, wenn der Luftreifen (2) auf dem Fahrzeug montiert ist, die Anzahl der zweiten blind endenden Feinschnitte (74), die auf dem mittleren Landabschnitt (50ms) gebildet sind, größer ist als die Anzahl der ersten blind endenden Feinschnitte (72), die darauf gebildet sind.

## Revendications

1. Bandage pneumatique (2) comprenant une bande de roulement (4) ayant une couche de base (26) et une couche de coiffe (28) située radialement à l'extérieur de la couche de base (26), dans lequel
la couche de coiffe (28) inclut un élément central (30) et une paire d'éléments latéraux (32) situés à l'extérieur de l'élément central (30) dans une direction axiale, et
chaque élément latéral (32) est plus flexible que l'élément central (30),
**caractérisé en ce que**
une dureté (Hb) de la couche de base (26) est égale à une dureté (Hs) de chaque élément latéral (32) ou la couche de base (26) est plus flexible que chaque élément latéral (32), quand la dureté (Hb, Hs) est mesurée en accord avec les standards de la norme industrielle japonaise JIS K6253 dans une condition de température de 23 °C en utilisant un duromètre de type A,
une pluralité de rainures circonférentielles (48, 48s, 48m) sont formées sur la bande de roulement (4), grâce à quoi une pluralité de portions en relief (50, 50s, 50ss, 50su, 50m, 50ms, 50mu) sont formées dans la bande de roulement (4),
parmi la pluralité de rainures circonférentielles (48, 48s, 48m), une rainure circonférentielle située sur chaque côté extérieur dans la direction axiale est une rainure circonférentielle d'épaulement (48s),
parmi la pluralité de portions en relief (50, 50s, 50ss, 50su, 50m, 50ms, 50mu), une portion en relief située sur chaque côté extérieur dans la direction axiale est une portion en relief d'épaulement (50s, 50ss, 50su), et une portion en relief située à l'intérieur de la portion en relief d'épaulement (50s, 50ss, 50su) est une portion en relief médiane (50m, 50ms, 50mu),
la couche de coiffe (28) dans la portion en relief d'épaulement (50s, 50ss, 50su) inclut l'élément latéral (32),
une pluralité de rainures latérales (52) sont formées sur la portion en relief d'épaulement (50s, 50ss, 50su), et
la pluralité de rainures latérales (52) ont chacune une portion d'extrémité à l'intérieur de la portion en relief d'épaulement (50s, 50ss, 50su) et s'étendent depuis la portion d'extrémité vers une extrémité de la bande de roulement (4).

2. Bandage pneumatique (2) selon la revendication 1, dans lequel un rapport de la dureté (Hs) de chaque élément latéral (32) sur une dureté (Hc) de l'élément central (30) n'est pas inférieur à 85 % et n'est pas supérieur à 98 %.

3. Bandage pneumatique (2) selon la revendication 1 ou 2, dans lequel
un rapport d'une largeur (GL) de chaque rainure latérale (52) sur une largeur (GS) de la rainure circonférentielle d'épaulement (48s) n'est pas inférieur à 45 % et n'est pas supérieur à 65 %, et
un rapport d'une profondeur (DL) de chaque rainure latérale (52) sur une profondeur (DS) de la rainure circonférentielle d'épaulement (48s) n'est pas inférieur à 60 % et n'est pas supérieur à 80 %.

4. Bandage pneumatique (2) selon l'une quelconque des revendications 1 à 3, dans lequel une fente ouverte (76) connectant chaque rainure latérale (52) et la rainure circonférentielle d'épaulement (48s) est formée sur une portion en relief d'épaulement (50su) située sur un côté intérieur d'un véhicule quand le bandage pneumatique (2) est monté sur le véhicule.

5. Bandage pneumatique (2) selon la revendication 4, dans lequel un rapport d'une longueur (LP) dans la direction axiale de la fente ouverte (76) sur une largeur (WS) de la portion en relief d'épaulement (50su) n'est pas inférieur à 25 % et n'est pas supérieur à 40 %.

6. Bandage pneumatique (2) selon l'une quelconque des revendications 1 à 5, dans lequel un rapport de la largeur (WS) de la portion en relief d'épaulement (50s, 50ss, 50su) sur une largeur de contact au sol (TW) de la bande de roulement (4) n'est pas inférieur à 20 % et n'est pas supérieur à 35 %.

7. Bandage pneumatique (2) selon l'une quelconque des revendications 1 à 6, dans lequel un rapport (BS/AS) de l'épaisseur moyenne (BS) de la couche de base (26) et de l'épaisseur moyenne (AS) de la bande de roulement (4) dans la portion en relief d'épaulement (50s, 50ss, 50su) est plus élevé qu'un rapport (BM/AM) de l'épaisseur moyenne (BM) de la couche de base (26) et de l'épaisseur moyenne (AM) de la couche de roulement (4) dans la portion en relief médiane (50m, 50ms, 50mu).

8. Bandage pneumatique (2) selon la revendication 7, dans lequel une différence entre le rapport (BS/AS) de l'épaisseur moyenne (BS) de la couche de base (26) et de l'épaisseur moyenne (AS) de la bande de roulement (4) dans la portion en relief d'épaulement (50s, 50ss, 50su) et le rapport (BM/AM) de l'épaisseur moyenne (BM) de la couche de base (26) et de l'épaisseur moyenne (AM) de la bande de roulement (4) dans la portion en relief médiane (50m, 50ms, 50mu) n'est pas inférieure à 5 % et n'est pas supérieure à 10 %.

9. Bandage pneumatique (2) selon l'une quelconque des revendications 1 à 8, dans lequel la couche de coiffe (28) dans la portion en relief d'épaulement (50s, 50ss, 50su) est composée de l'élément latéral (32).

10. Bandage pneumatique (2) selon l'une quelconque des revendications 1 à 9, dans lequel
la pluralité de rainures circonférentielles (48, 48s, 48m) incluent une rainure circonférentielle médiane (48m) située à l'intérieur de la rainure circonférentielle d'épaulement (48s) dans la direction axiale,
une portion entre la rainure circonférentielle d'épaulement (48s) et la rainure circonférentielle médiane (48m) est la rainure en relief médiane (50m, 50ms, 50mu),
une pluralité de fentes à cul-de-sac (68) sont formées sur la portion en relief médiane (50m, 50ms, 50mu),
les fentes à cul-de-sac (68) incluent des premières fentes à cul-de-sac (72) ayant chacune une portion d'extrémité à l'intérieur de la portion en relief médiane (50m, 50ms, 50mu) et connectant la portion d'extrémité et la rainure circonférentielle d'épaulement (48s), et des secondes fentes à cul-de-sac (74) ayant chacune une portion d'extrémité à l'intérieur de la portion en relief médiane (50m, 50ms, 50mu) et connectant la portion d'extrémité et la rainure circonférentielle médiane (48m), et
dans une portion en relief médiane (50ms) située sur un côté extérieur du véhicule quand le bandage pneumatique (2) est monté sur le véhicule, le nombre de secondes fentes à cul-de-sac (74) formées sur la portion en relief médiane (50ms) est plus grand que le nombre de premières fentes à cul-de-sac (72) formées sur celle-ci.
